# EUROPÄISCHE PATENTSCHRIFT

(11) **EP 2 781 328 B1**
(45) Veröffentlichungstag und Bekanntmachung des Hinweises auf die Patenterteilung: **24.05.2023**
(21) Anmeldenummer: 13160492.8
(22) Anmeldetag: 21.03.2013
(51) Int. Cl.: B29C 44/08, B29C 45/14, B29L 31/30

(54) **Verfahren zur Herstellung eines Verkleidungsbauteils**
Method for producing a cladding component
Procédé de fabrication d'un composant d'habillage

(43) Veröffentlichungstag der Anmeldung: 24.09.2014
(73) Patentinhaber: SMP Deutschland GmbH, 79268 Bötzingen (DE)
(72) Erfinder: Schwarz, Timo, 77948 Friesenheim (DE); Durupt, Xavier, 68320 Jebsheim (FR)
(74) Vertreter: Westphal, Mussgnug & Partner Patentanwälte mbB

(56) Entgegenhaltungen:
- EP-A2- 0 242 152
- DE-A1-102008 044 026
- JP-A- S61 130 012
- US-A1- 2004 099 989
- US-A1- 2006 097 425

## Beschreibung

Die Erfindung betrifft ein Verfahren zur Herstellung eines Verkleidungsbauteils mit den oberbegrifflichen Merkmalen des Patentanspruchs 1 wie beispielsweise aus US 2004/099989 A bekannt.

Aus der DE 10 2010 015 056 A1 ist ein Verfahren zur Herstellung eines beschichteten Kunststoffbauteils bekannt, umfassend die Schritte: Bereitstellen eines Formwerkzeugs, das einen Formhohlraum definiert; Einspritzen einer geschmolzenen, ein Treibmittel enthaltenden thermoplastischen Komponente in den Formhohlraum, sodass der Formhohlraum mit der thermoplastischen Komponente gefüllt wird und die thermoplastische Komponente innerhalb des Formhohlraums aufschäumt und eine Integralschaumstruktur bildet; Einspritzen wenigstens einer Weichkomponente unter einem Druck von 10 bis etwa 100 bar in den Formhohlraum zur Bildung einer Beschichtung auf der Oberfläche der Integralschaumstruktur; Entformen des Kunststoffbauteils.

Als weiterer Stand der Technik werden die US 2004/009989 A1, die US 4 207 049 A, die DE 10 2008 044026A1, die EP 0 242 152 A2, die JP S61 130012 A, die US 2006/097425 A1 und die EP 1 666 225 A1 genannt.

Allgemein besteht ein Problem beim Verwenden solcher Grundkörper darin, dass die Gasexpansion beim Schäumen Oberflächendefekte verursacht. Solche Oberflächendefekte können möglicherweise durch eine Weichkomponente, nicht aber durch eine herkömmliche Lackierung abgedeckt werden.

Der Erfindung liegt das Problem zugrunde, ein Verfahren bereitzustellen, das ein Verkleidungsbauteil im Sichtbereich möglichst günstig herstellt und möglichst mit geschäumten Grundkörpern arbeitet.

Das Problem wird erfindungsgemäß gelöst durch ein Verfahren umfassend die Merkmale des Anspruchs 1 Vorteilhafte Ausführungsformen sind in den Unteransprüchen angegeben.

Das Verfahren zur Herstellung eines Verkleidungsbauteils umfasst eine Hartkomponente als Beschichtung, sodass im Ergebnis eine Härte von zumindest 68 Shore-D messbar ist. Die Hartkomponente wird demnach in einem einzigen Aggregat, welches den Formhohlraumraum umfasst, auf den Grundkörper aufgebracht, während oder nachdem derselbe geschäumt worden ist. Die Hartkomponente kann beispielsweise eine Grundierung sein. Ein anschließendes zusätzliches Lackieren des Grundkörpers kann im Rahmen der Erfindung in demselben Aggregat erfolgen.

Vorteile des erfindungsgemäßen Verfahrens sind Eliminierung der durch den Schaumspritzguss entstandenen Oberflächendefekte, günstiges Herstellverfahren für leichte Karrosserieanbauteile mit hohen Qualitätsanforderungen an deren Oberflächen. Solche Anforderungen werden als Class-A Oberflächenqualität von Blech bezeichnet.

Gemäß einer vorteilhaften Ausführungsform eines erfindungsgemäßen Verfahrens wird eine Schichtdicke der Beschichtung zwischen 0,1 mm und 0,7 mm gewählt.

Beispielsweise kann ein Expansionshub ausgeführt werden oder ein Prägen stattfinden. Auch kann sich nach einer vorteilhaften Ausführungsform eine Veränderung des Formholraums der Beschichtung entsprechend ausgeführt werden, um ein vollständiges Grundieren zu steuern.

Nachfolgend wird die Erfindung anhand von Ausführungsbeispielen näher erläutert. Die Ausführungsbeispiele sind schematisch dargestellt. Es zeigen
- Fig. 1: ein Verkleidungsbauteil, ausschnittsweise, gemäß einem ersten Ausführungsbeispiel,
- Fig. 2: ein weiteres Verkleidungsbauteil, ausschnittsweise, gemäß einem zweiten Ausführungsbeispiel,
- Fig. 3: eine schematische Darstellung eines Vorrichtungsaufbaus,
- Fig. 4: die Vorrichtung aus Fig. 3 nach einem Auffahren und anschließendem Überfluten,
- Fig. 5: eine weitere schematische Darstellung ähnlich Fig. 3, ebenfalls nach dem Spritzgießen, gemäß einer zweiten Ausführungsform, und
- Fig. 6: die Vorrichtung aus Fig. 5 nach dem Einsetzen einer zweiten Matrize und anschließendem Überfluten.

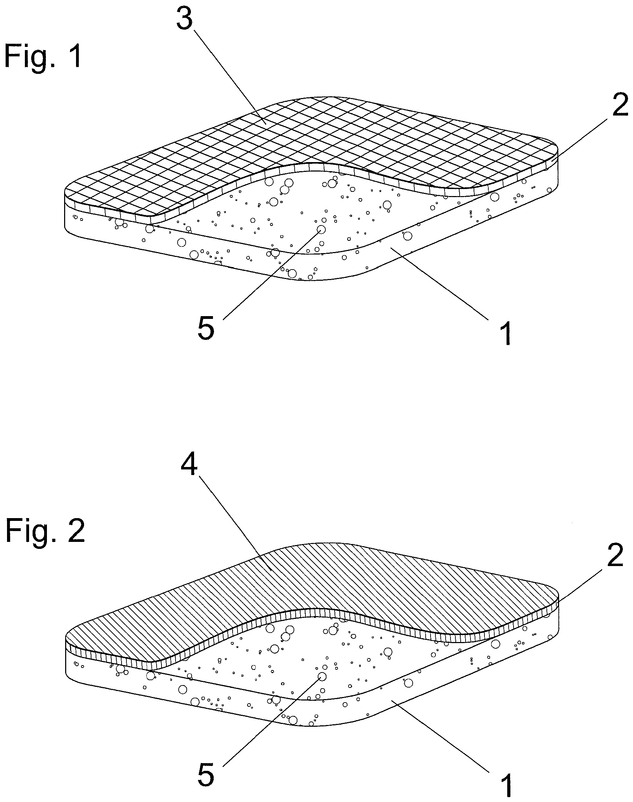

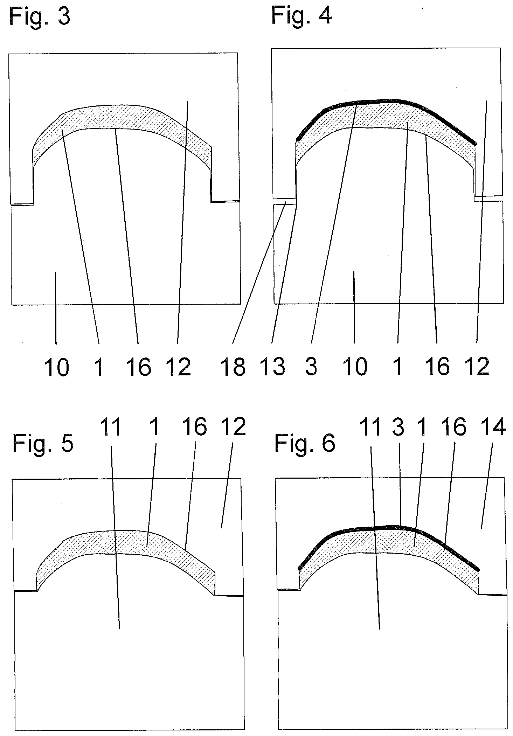

Figur 1 zeigt schematisch und ausschnittsweise ein nach einem erfindungsgemäßen Verfahren hergestelltes Verkleidungsbauteil gemäß einem ersten Ausführungsbeispiel. Das Verkleidungsbauteil hat einen Grundkörper 1 mit einer Schaumstruktur. Beim Schäumen in einem in Figur 3 dargestellten Formhohlraum 16 mit einer ersten Matrize 12 sind Oberflächendefekte 5 entstanden, beispielsweise Schlieren, Krater oder Einfallstellen.

Eine Grundierung wird bevorzugt in einem sogenannten One-Shot-Prozess, jedenfalls auf das Schäumen folgend, in demselben Formhohlraum 16 auf den Grundkörper 1 aufgebracht, vgl. Figur 4. Ggf. wurde der Formhohlraum hierzu leicht vergrö-ßert und blieb dabei der Bezeichnung nach derselbe Formhohlraum 16. Diese Veränderung kann in den Darstellungen der Figuren 3 und 4 an einem Spalt 18 gemessen werden, der in Fig. 3 noch nicht vorhanden war und in Fig. 4 zwischen einer Patrize 10 und einer Matrize 12 entstanden ist. Der Grundkörper 1 wird bevorzugt mit der Grundierung 3 überflutet, sodass die Grundierung 3 jede Fläche des Grundkörpers 1 erreicht. Die Oberflächendefekte 5 werden mithin ausgeglichen.

Beim Vergrößern des Formhohlraums 16 wird gemäß der in den Figuren 3 und 4 veranschaulichten nicht erfindungsgemäßen Ausführungsform ein Werkzeug bestehend aus der Patrize 10 und der Matrize 12 vor dem Überfluten aufgefahren. Die Patrize 10 weist eine Tauchkante 13 auf, welche die Matrize 12 führt bzw. der Matrize 12 als Anschlag dient.

Statt den Formhohlraum 16 durch das Auffahren der ersten Matrize 12 zu vergrößern, wird gemäß einer erfindungsgemäßen Ausführungsform (vgl. Fig. 5 und 6) nach dem Spritzgießen des Grundkörpers 1 eine zweite Matrize 14 statt der ersten Matrize 12 bis beinahe auf den Grundkörper 1 ohne Spalt zur Patrize 11 auf die Patrize 11 aufgesetzt. Die Patrize 11 ist gemäß diesem Ausführungsbeispiel ohne Tauchkante ausgeführt. Hatte die erste Matrize 12 den Formhohlraum 16 einseitig begrenzt und der Beschichtung lediglich dann in einem Zwischenraum zwischen Matrize 12 und Grundkörper 1 Platz geboten, wenn sie gegenüber dem Grundkörper 1 bewegt worden ist, so gestattet der Einsatz der zweiten Matrize 14 als Ersatz für die erste Matrize 12 ein unkompliziertes Aufsetzen der zweiten Matritze auf die einfacher gehaltene Patrize 11. Das Verfahren gemäß diesem Ausführungsbeispiel verläuft ohne Steuerungen oder Regelungen für das im Vergleich zum ersten Ausführungsbeispiel weggefallene Auffahren bei guter Reproduzierbarkeit.

Der in Fig. 1 dargestellte, mit der Grundierung 3 überflutete Grundkörper 1 wird bevorzugt nachträglich ein- oder zweischichtig offline sprühlackiert.

Abweichend von dem in Figur 1 dargestellten ersten Ausführungsbeispiel wird gem. dem in Figur 2 dargestellten zweiten Ausführungsbeispiel eines erfindungsgemäß hergestellten Verkleidungsbauteils der Grundkörper 1 ohne vorherige Grundierung direkt mit Decklack 4 überflutet.

### Bezugszeichenliste

- 1: Grundkörper
- 2: Beschichtung
- 3: Grundierung
- 4: Decklack
- 5: Oberflächendefekt

- 10: Patrize
- 11: weitere Patrize
- 12: erste Matrize
- 13: Tauchkante
- 14: zweite Matrize
- 16: Formhohlraum
- 18: Spalt

## Patentansprüche

1. Verfahren zur Herstellung eines Verkleidungsbauteils, insbesondere eines Außenverkleidungsbauteils zum Anbau an eine Karosserie eines Kraftfahrzeugs, bestehend aus einem Grundkörper (1), der als erster Verfahrensschritt in einem Schaumspritzgießprozess in einem Formhohlraum hergestellt wird, und aus einer Beschichtung (2) von zumindest Teilflächen des Grundkörpers (1), wobei die Beschichtung (2) auf den Schaumspritzgießprozess folgend in dem Formhohlraum auf den Grundkörper (1) aufgebracht wird, in welchem der Grundkörper (1) selbst entstanden ist,
wobei die Beschichtung (2) eine Hartkomponente mit einer Härte von zumindest 68 Shore-D ist,
wobei eine Matrize (12) und eine Patrize (11 ) zur Begrenzung des ansonsten selben Formhohlraums eingesetzt wird, bevor die Beschichtung (2) aufgebracht wird, wobei der Formhohlraum während des Verfahrens zumindest einmalig in zumindest einer Dimension verändert wird, **dadurch gekennzeichnet, dass** nach dem Spritzgießen des Grundkörpers (1) zur Vergrößerung des Formhohlraums eine zweite Matrize (14) statt der ersten Matrize (12) bis beinahe auf den Grundkörper (1) ohne Spalt zur Patrize (11) auf die Patrize (11) aufgesetzt wird.

2. Verfahren nach Anspruch 1,
**dadurchgekennzeichnet,** dass die Hartkomponente eine Grundierung (3) oder ein Decklack (4) ist.

3. Verfahren nach einem der vorangehenden Ansprüche,
**dadurch gekennzeichnet, dass** die Beschichtung (2) eine Schichtdicke von 0,1 mm bis 0,7 mm aufweist.

## Claims

1. Method for manufacturing a cladding component, in particular an exterior cladding component, for mounting onto the chassis of a motor vehicle, comprised of a main body (1) which, in a first method step, is manufactured in a mold cavity in a foam injection molding process, and of a coating (2) of at least partial surfaces of the main body (1), wherein the coating (2) is applied to the main body (1), following the foam injection molding process, in the mold cavity in which the main body (1) itself was produced,
wherein the coating (2) is a hard component with a hardness of at least 68 Shore D, wherein a female (12) and a male (11) are used to delimit the, apart from that, same mold cavity before the coating (2) is applied,
wherein, during the process, the mold cavity is altered in at least one dimension at least once,
**characterized in that**, after the injection molding of the main body (1), instead of the first female (14), a second female (14) is placed onto the male (11), almost to the main body (1), with no gap to the male (11), in order to enlarge the mold cavity.

2. Method in accordance with claim 1,
**characterized in that**
the hard component is a primer (3) or a top coat (4).

3. Method in accordance with either of the preceding claims,
**characterized in that** the coating (2) has a layer thickness of 0.1 mm to 0.7 mm.

## Revendications

1. Procédé de fabrication d'un composant d'habillage notamment d'un composant d'habillage extérieur pour être installé sur une carrosserie d'un véhicule automobile, comprenant un corps de base (1) réalisé par une première étape d'un procédé d'injection-expansion dans une cavité de moule et d'un revêtement (2) d'au moins les parties de surface du corps de base (1), le revêtement (2) étant appliqué à la suite du procédé d'injection-expansion dans la cavité du moule sur le corps de base (1), cavité dans laquelle a été formé le corps de base (1),
- le revêtement (2) étant un composant dur ayant une dureté d'au moins 68 Shore-D,
- une matrice (12) et un patrice (11) étant utilisés pour délimiter cette même cavité du moule, avant d'appliquer le revêtement (2),
au moins une dimension de la cavité étant modifiée au moins une fois au cours du procédé,
procédé **caractérisé en ce que**
après l'injection du corps de base (1), pour augmenter la cavité du moule on applique sur ce patrice une seconde matrice (14) à la place de la première matrice (12) jusque au voisinage du corps de base (1) sans intervalle par rapport au patrice (11).

2. Procédé selon la revendication 1,
**caractérisé en ce que**
le composant dur est un apprêt (3) ou un vernis de couverture (4).

3. Procédé selon les revendications précédentes,
**caractérisé en ce que**
le revêtement (2) a une épaisseur de 0,1 mm-0,7 mm.
